# EUROPÄISCHE PATENTSCHRIFT

(11) **EP 2 396 156 B1**
(45) Veröffentlichungstag und Bekanntmachung des Hinweises auf die Patenterteilung: **12.08.2015**
(21) Anmeldenummer: 10704348.1
(22) Anmeldetag: 10.02.2010
(51) Int. Cl.: B01D 46/24, B01D 46/00, C04B 38/06, C04B 111/00, B28B 11/08

(54) **VERFAHREN ZUR HERSTELLUNG EINES KERAMISCHEN FILTERELEMENTS MIT STRUKTURELEMENTEN**
PRODUCTION METHOD OF A CERAMIC FILTER ELEMENT WITH STRUCTURAL ELEMENTS
PROCÉDÉ DE PRODUCTION D'UN ÉLÉMENT DE FILTRAGE EN CÉRAMIQUE COMPORTANT DES ÉLÉMENTS STRUCTURAUX

(30) Priorität: 10.02.2009 DE 102009008297
(43) Veröffentlichungstag der Anmeldung: 21.12.2011
(73) Patentinhaber: Mann + Hummel GmbH, 71638 Ludwigsburg (DE)
(72) Erfinder: LINHART, Jochen, 71409 Schwaikheim (DE); OTTERBACH, Sabine, 74321 Bietigheim-Bissingen (DE); LICHTENWALTER, Kathrin, 90409 Nürnberg (DE); MICKE, Michael, 589473 Singapur (SG); GERLACH, Karin, 72800 Eningen u. A. (DE)
(86) Internationale Anmeldenummer: PCT/EP2010/051635
(87) Internationale Veröffentlichungsnummer: WO 2010/092072

(56) Entgegenhaltungen:
- EP-A2- 0 360 591
- WO-A1-2006/005668
- DE-A1-102006 041 188
- US-A1- 2005 025 933

## Beschreibung

### Technisches Gebiet

Die Erfindung betrifft allgemein die Herstellung von keramischen Filterelementen für den Abgasfilter einer Brennkraftmaschine. Insbesondere einen keramischen, wabenförmigen Dieselpartikelfilter.

### Stand der Technik

Moderne Dieselmotoren emittieren wesentlich weniger Rußpartikel als ältere Aggregate. Dieselpartikelfilter senken dabei den Partikelausstoß erheblich. Selbst feinste Partikel, die bei der Verbrennung des Dieselkraftstoffes entstehen, werden durch den Filter zurückgehalten.

Bekannt sind Dieselpartikelfilter (DPF) aus extrudierter Keramik und auf Basis von Wickelelementen. So offenbart bspw. die WO 2006/005668 ein Verfahren zur Herstellung eines keramischen Filterelements in einem Abgasfilter für Brennkraftmaschinen. Hierbei wird zunächst eine brennbare, nicht-keramische Trägerbahn mit einem keramischen Schlicker getränkt und anschließend in der gewünschten geometrischen Form soweit ausgebrannt, bis die Trägerbahn verbrannt und ein starrer Filterkörper gebildet ist. Solche porösen keramischen Bauteile können beispielsweise als Katalysatorträger oder für Filtrationsanwendungen, vor allem im Hochtemperaturbereich, eingesetzt werden.

Nachteilig an den Dieselpartikelfiltern des Standes der Technik ist u. a., dass diese beim Einbau in ein Gehäuse, dem sogenannten Canning, Probleme bereiten, da sich aufgrund ihrer glatten Oberfläche keine gute Verkrallung in der beim Einbau verwendeten Keramikmatte zwischen DPF und Blechgehäuse ergibt. Daher muss bei den Filtern des Standes der Technik eine stärkere Verpressung der Keramikmatte erfolgen.

Es besteht folglich ein Bedarf, ein keramisches Filterelement, insbesondere einen Dieselpartikelfilter bereit zu stellen, das diesen Nachteil des Standes der Technik vermeidet.

Die Erfindung bezieht sich insbesondere auf die Herstellung von keramischen Filterelementen als Dieselpartikelfilter und Partikelfilter für Brennkraftmaschinen sowie als keramische Träger für Katalysatorträger.

Im bei der Erfindung bevorzugten Verfahren wird ein nichtkeramisches Medium, z. B. Papier, insbesondere solches umfassend Cellulose, zunächst in Form gebracht, z. B. in Form eines Wickelkörpers. Der Wickelkörper kann dabei eine Flach- und eine Welllage umfassen. Diese Form, z. B. der Wickelkörper, wird dann mit einer keramischen Masse, z. B. einem keramischen Schlicker getränkt. Die getränkte Form wird dann gebrannt bzw. gesintert. Hierbei können organische Bestandteile, z. B. des Papiers, das z. B. Cellulosefasern umfasst, entfernt oder umgewandelt werden.

### Offenbarung der Erfindung

Es ist die Aufgabe der vorliegenden Erfindung, ein keramisches Filterelement, insbesondere einen Dieselpartikelfilter, zum Einbau in einem Abgasfilter einer Brennkraftmaschine bereitzustellen, das einen besseren Halt des Filters in dem Einbaugehäuse gewährleistet.

Es ist eine weitere Aufgabe der vorliegenden Erfindung, einen solchen Dieselpartikelfilter bereitzustellen, der eine korrekte Montage sicherstellt.

Diese und weitere Aufgaben werden durch das Verfahren zur Herstellung eines keramischen Dieselpartikelfilter nach Anspruch 1 gelöst.

### Ausführungsform(en) der Erfindung

Bisher sind keine Dieselpartikelfilter bekannt, die bereits bei der Keramisierung eine strukturierte Außenseite aufweisen. Standard-Dieselpartikelfilter werden ein- oder mehrteilig extrudiert. Eine Außenkontur muss also noch durch eine mechanische Bearbeitung der keramischen Segmente nachbearbeitet werden. Weiterhin wird noch eine zusätzliche dünne keramische Schicht aufgebracht, um die jetzt nach außen offenen Kanäle zu verschließen und um die Toleranzen auszugleichen.

Durch den Extrusionsprozess selbst können keine beliebigen Strukturen, bspw. Vertiefungen und / oder Erhöhungen auf der Außenseite des Dieselpartikelfilters aufgebracht werden.

Erfindungsgemäß werden auf der Außenseite (Mantelfläche) eines Dieselpartikelfilters unterschiedliche Strukturen bzw. Muster aufgebracht. Dabei kann es sich bspw. um Erhöhungen und / oder Vertiefungen handeln, die unterschiedliche Funktion haben können. Die Strukturen können entweder auf der gesamten Fläche oder auch nur in Teilbereichen der Außenseite aufgebracht werden.

Besonders einfach ist die Erzeugung solcher Strukturen beim sogenannten Infiltrationsprozess, da sich diese durch die Verwendung einer Schablone bzw. eines Werkzeugs während des Prozesses einfach und ohne zusätzlichen Aufwand abbilden lassen. Solche Strukturen können aber auch bei herkömmlichen extrudierten Dieselpartikelfiltern Vorteile bringen. Das Aufbringen dieser Strukturen lässt sich in gewissem Maße auch beim Aufbringen der oben erwähnten zusätzlichen dünnen keramischen Schicht durchführen. Dies kann durch Schablonen / Werkzeuge oder auch durch Abschaben / Einritzen oder Schleifen erzeugt werden.

Durch die Strukturierung der Außenseite des keramischen Dieselpartikelfilters kann ein einfacheres Canning erfolgen, da sich durch die raue strukturierte Oberfläche eine bessere Verkrallung in der Keramikmatte zwischen Partikelfilter und Blechgehäuse ergibt. Damit ist eine geringere Verpressung der Matte erforderlich.

Wird die Strukturierung bspw. in Form von Pfeilen aufgebracht, d. h., als geformte Richtungsanzeige, ist eine einfache und eindeutige Kennzeichnung der Einbaurichtung möglich.

Durch das Erzeugen von Funktionselementen, z. B. in Form von Zapfen, Bund oder dgl. lässt sich in ähnlicher Weise eine richtige Montage sicherstellen.

Des weiteren können bspw. Beschriftungen, ein Firmenlogo etc. als Produktschutz angebracht werden.

Die Erfindung wird nachfolgend ferner anhand mehrerer Ausführungsbeispiele unter Bezugnahme auf die beigelegten Figuren näher erläutert.
Fig. 1 zeigt ein keramisches Filterelement mit einer Struktur auf dem Außenmantel.
Fig. 2 zeigt einen Träger, der als Negativ für die Struktur auf dem Filter-element dient.

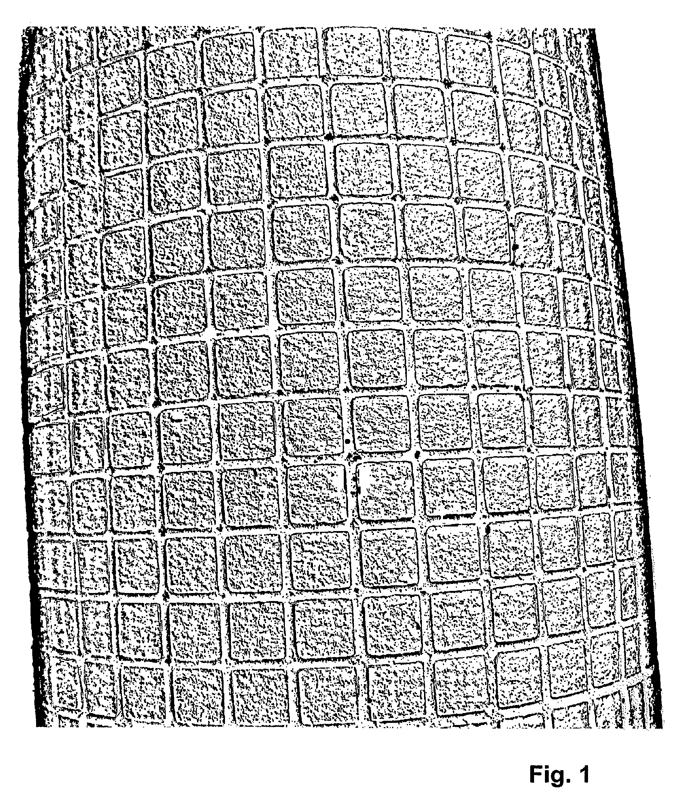

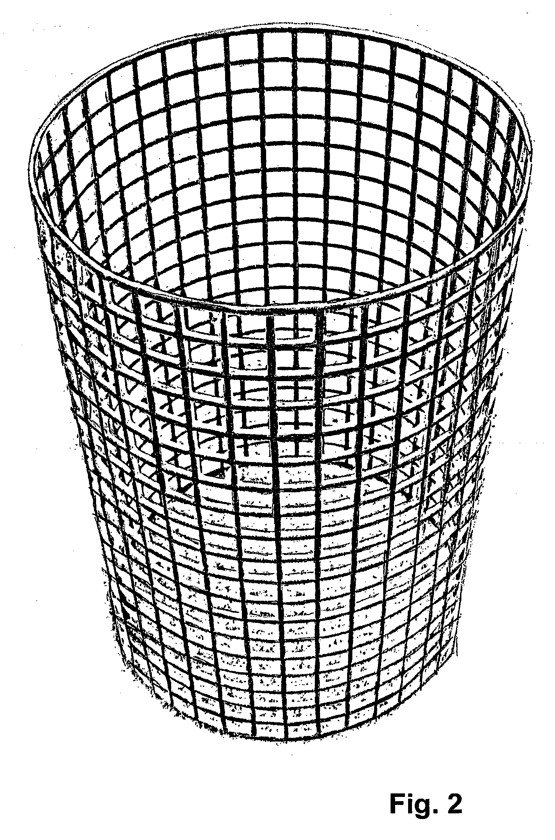

Fig. 1 zeigt eine Rechteckgitterstruktur auf der Außenseite eines erfindungsgemäßen keramischen Filterelements. Durch derartige Gitterstrukturen kann ein leichteres Canning erzielt werden. Ein Wickelfilter wurde in einen Träger gemäß Fig. 2 eingebracht und dann mit keramischem Schlicker getränkt. An den Stellen, an denen der Träger auf dem Wickelfilter auflag, wurde der Schlicker verdrängt. In den Öffnungen des Trägers konnte sich hingegen eine größere Menge keramischen Schlickers absetzen, der nun die Außenstruktur bilden kann. Diese Außenstruktur ist derart ausgebildet, derart "erhaben", dass selbst bei Aufbringung einer Außenschicht, z: B. durch Bestreichen, die Struktur bestehen bleibt. Eine derartige Struktur lässt sich natürlich auch für Beschriftungen verwenden. Da die Struktur durch einen Abformprozess entsteht, ist keine spanende Bearbeitung des Filterelements notwendig.

## Patentansprüche

1. Verfahren zur Herstellung eines keramischen Filterelements, insbesondere eines Dieselpartikelfilters, wobei die Mantelfläche des Filterelements während der Herstellung mit Strukturelementen versehen wird und wobei das Verfahren folgende Schritte umfasst
a. Herstellung eines Wickelfilters aus einer oder mehreren Lagen eines papierartigen Stoffes, z. B. Filterpapier,
b. Einbringen dieses Wickelfilters in einen Träger, der das Negativ der Strukturelemente aufweist, sodass auf dem Außenmantel des Wickelfilters die Strukturen vorgegeben werden,
c. Tränken des Wickelfilters mit keramischem Schlicker, sodass der Schlicker von den Negativstrukturen des Trägers an bestimmten Stellen verdrängt werden kann,
d. Abnehmen des Trägers
e. Sintern des getränkten Wickelfilters.

## Claims

1. Method for manufacturing a ceramic filter element, in particular a diesel particulate filter, the girth area of the filter element being provided with structural elements during manufacturing and the method comprising the following steps
a. Manufacturing of a wound filter made of one or several layers of a papery material, e.g. filter paper,
b. Introducing this wound filter into a support featuring the negative of the structural elements so that the structures are predefined on the outer wall of the wound filter,
c. Soaking the wound filter with ceramic slurry so that the slurry can be displaced by the negative structures of the support at certain areas,
d. Removing the support
e. Sintering the soaked wound filter.

## Revendications

1. Procédé de fabrication d'un élément filtrant en céramique, notamment d'un filtre à particules diesel, la surface d'enveloppe de l'élément filtrant étant dotée d'éléments structurels pendant la fabrication et le procédé comprenant les étapes suivantes
a. Fabrication d'un filtre enroulé composé d'une ou de plusieurs couches d'un matériau de type papier, par exemple papier filtre,
b. Introduction de ce filtre enroulé dans un support qui présente le négatif des éléments structurels, si bien que les structures sont prédéfinies sur la paroi extérieure du filtre enroulé,
c. Impregnation du filtre enroulé d'une barbotine céramique, si bien que la barbotine peut être déplacée par les structures négatives du support à certains endroits,
d. Retrait du support
e. Frittage du filtre enroulé et impregné.
